# EUROPEAN PATENT APPLICATION

(11) **EP 4 102 825 A1**
(43) Date of publication of application: **14.12.2022**
(21) Application number: 21775489.4
(22) Date of filing: 12.03.2021
(51) Int. Cl.: H04N 5/232, G03B 15/00, G03B 17/18, G06F 3/0484, G06F 3/16

(54) **IMAGE-CAPTURING DEVICE, IMAGE-CAPTURING METHOD, AND PROGRAM**

(30) Priority: 27.03.2020 JP 2020057270
(71) Applicant: Sony Group Corporation, Minato-Ku, Tokyo, 108-0075 (JP)
(72) Inventor: ISHII, Satoru, Tokyo 108-0075 (JP); YAMAGUCHI, Tadashi, Tokyo 108-0075 (JP)
(74) Representative: D Young & Co LLP
(86) International application number: PCT/JP2021/010092
(87) International publication number: WO 2021/193147

(57) **Abstract**

The present technology relates to an imaging device, an imaging method and a program, each of which enables a user to appropriately give an instruction on a subject to be focused.

The imaging device according to the present technology includes a signal processing unit configured to display information representing recognition results of a subject in an image obtained by shooting, and to display in a superimposed manner, in response to a user's voice input indicating a focus position, information representing the focus position estimated as the user's intention on the image. The present technology can be applied to an imaging device operable by a voice.

## Description

### TECHNICAL FIELD

The present technology relates to an imaging device, an imaging method and a program, in particular, relates to an imaging device, an imaging method and a program each of which enables a user to appropriately give an instruction on a subject to be focused.

### BACKGROUND ART

A bracket function is used by many photographers as a function when shooting with a camera. The bracket function refers to a function of taking a burst shot with varied parameters such as exposure and white balance.

Meanwhile, a focus position may be fixed or a photographer may track a position initially designated in a burst mode. In a case where a photographer wants to take a burst shot while varying a focus position, they need to operate a camera every time they change the focus position.

For example, in a case where a photographer takes a picture respectively focusing on the left and right eyes of a person who is the subject or respectively focusing on the eyes of all of a plurality of persons for portrait photography, shooting is disturbed since the photographer needs to operate the camera each time they focus on the eyes.

A flexible user interface (UI) is required to implement a function to take a picture while instantly changing various settings such as exposure, white balance and focus position.

For example, Patent Document 1 discloses an image pickup device which learns conditions of a user's preferred image on the basis of a shooting history, and performs various processes such as autofocus control, exposure control and auto white balance setting according to the user's preferences.

### CITATION LIST

### PATENT DOCUMENT

Patent Document 1: Japanese Patent Application Laid-Open No. 2019-118098

### SUMMARY OF THE INVENTION

### PROBLEMS TO BE SOLVED BY THE INVENTION

It is proposed to install a voice user interface as a flexible UI in a camera. For example, in a case where it is possible to give an instruction on a subject to be focused by voice, it is necessary to appropriately recognize a subject a user wants to take a shot of on the basis of the voice instruction and focus on such a subject.

The present technology is made to solve such a problem, and enables a user to appropriately give an instruction on a subject to be focused.

### SOLUTIONS TO PROBLEMS

According to one aspect of the present technology, an imaging device includes a signal processing unit configured to display information representing recognition results of a subject in an image obtained by shooting, and to display in a superimposed manner, in response to a user's voice input indicating a focus position, information representing the focus position estimated as the user's intention on the image.

According to one aspect of the present technology, information representing recognition results of a subject in an image obtained by shooting is displayed, and, in response to a user's voice input indicating a focus position, information representing the focus position estimated as the user's intention is displayed in a superimposed manner on the image.

### BRIEF DESCRIPTION OF DRAWINGS

Fig. 1 is a diagram illustrating a usage example of an imaging device according to one embodiment of the present technology.
Fig. 2 is a diagram illustrating an example of a display method for providing notification of subject recognition results.
Fig. 3 is a diagram illustrating a flow of processing in a case where subject recognition results are displayed by enclosing them with a frame.
Fig. 4 is a diagram illustrating a flow of processing in a case where subject recognition results are indicated by a mark.
Fig. 5 is a diagram illustrating a flow of processing in a case where subject recognition results are indicated by a mask.
Fig. 6 is a diagram illustrating an exemplified flow of processing a sequence operation.
Fig. 7 is a diagram illustrating flow of processing subject recognition based on learning results.
Fig. 8 is a diagram illustrating flow of processing subject recognition based on learning results.
Fig. 9 is a diagram illustrating another flow of processing subject recognition based on learning results.
Fig. 10 is a block diagram illustrating a configuration example of an imaging device.
Fig. 11 is a diagram illustrating an example of feature amounts of a subject to be shot.
Fig. 12 is a flowchart illustrating shooting processing.
Fig. 13 is a flowchart illustrating automatic recognition processing by a voice instruction executed in step S3 shown in Fig. 12.
Fig. 14 is a flowchart illustrating user intention reflection processing executed in step S24 shown in Fig. 13.
Fig. 15 is a block diagram illustrating a configuration example of computer hardware.

### MODE FOR CARRYING OUT THE INVENTION

Modes for carrying out the present technology will be described hereinbelow. The description will be given in the following order:
1. Overview of the Present Technology
2. Configuration of Imaging Device
3. Operations of Imaging Device
4. Modified Example

### <1. Overview of the Present Technology>

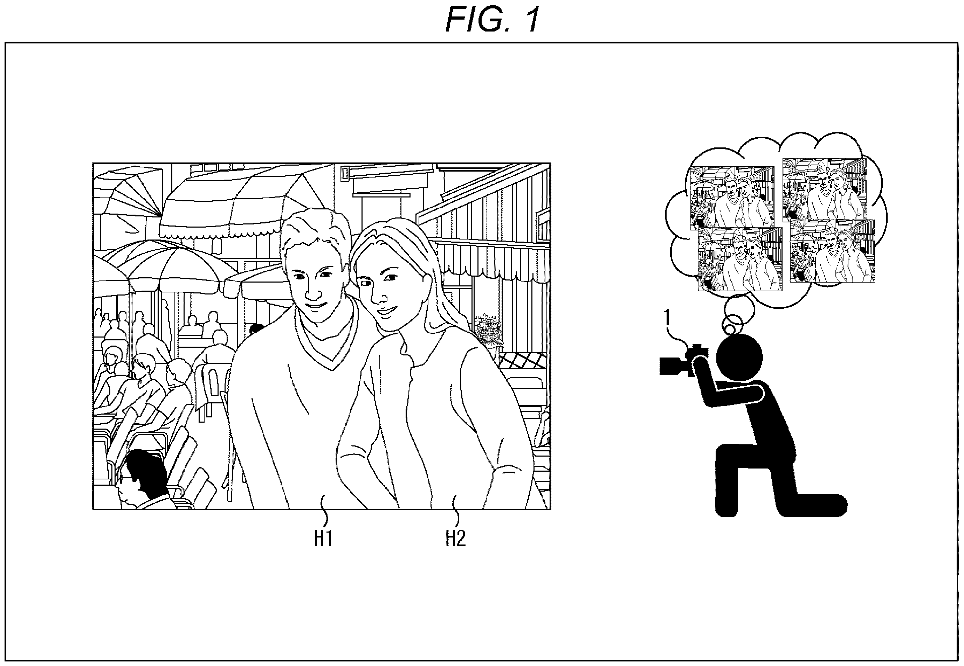

Fig. 1 is a diagram illustrating a usage example of an imaging device 1 according to one embodiment of the present technology.

An imaging device 1 is a camera that can be voice operated. In the example of Fig. 1, the imaging device 1 is a camera, but another device can be used as the imaging device 1 as long as it has an imaging function, such as a smartphone, a tablet terminal, or a personal computer.

The imaging device 1 is provided with a microphone for collecting speaking emitted by a photographer (user). The photographer can perform various operations such as setting of shooting parameters by speaking to the imaging device 1 and inputting a voice command. The voice command is input, for example, when an instruction on a focus position (in-focus position) is given.

In an example shown in Fig. 1, a lens of the imaging device 1 is directed such that persons H1 and H2 are located near the center of the angle of view. Other persons, buildings, and the like are shown behind the persons H1 and H2.

In such a situation, for example, in a case where the photographer speaks "focus on all the left and right eyes", the imaging device 1 performs voice recognition and semantic analysis, and takes a burst shot by focusing on each of the left and right eyes of the persons H1 and H2 according to what the photographer has spoken. That is, the imaging device 1 estimates that the photographer intends the persons H1 and H2 as subjects, and takes a shot with the persons H1 and H2 as subjects. In other words, the imaging device 1 does not take a shot with persons, for example, behind the persons H1 and H2 as subjects.

Accordingly, as illustrated in a speech balloon, four images are captured - including an image in focus on the left eye of the person H1, an image in focus on the right eye of the person H1, an image in focus on the left eye of the person H2, and an image in focus on the right eye of the person H2.

In a case where the focus position can be designated by such a voice command, the imaging device 1 needs to appropriately recognize the subject intended by the photographer.

The imaging device 1 displays a subject recognized by the imaging device 1 to notify the photographer of the subject using a display unit. The display unit including a liquid crystal display monitor, a viewfinder, and the like is provided on a rear surface of a housing of the imaging device 1.

The photographer gives an instruction on the focus position using a voice command while confirming the subject recognized by the imaging device 1 by viewing a display on the display unit. In a case of the example shown in Fig. 1, the photographer is notified that the persons H1 and H2 are recognized, and in response to the notification, they can give an instruction to set, for example, the eyes of the persons H1 and H2 as the focus positions by the voice command as described above.

As described above, the imaging device 1 notifies the photographer of the recognition results for an object such as a person, and takes a shot in response to the instruction of the focus position made by the photographer for the notification. The imaging device 1 takes a shot while communication is established between the imaging device 1 and the photographer, for example, the photographer makes a voice instruction of the focus position for the notification made by the imaging device 1.

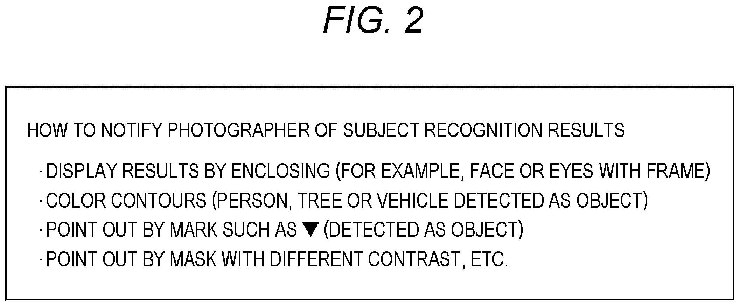

Fig. 2 is a diagram illustrating an example of a display method for providing notification of subject recognition results.

For example, before shooting a still image, a live view image for displaying an image captured by the imaging device 1 in real time is displayed on the display unit. The notification of the subject recognition results is performed by displaying in a superimposed manner, information indicating the subject recognized by the imaging device 1 on the live view image.

As illustrated in Fig. 2, examples of display method for providing notification of the subject recognition results include a method of displaying the results enclosed by a frame, a method of displaying the results with a colored contour, a method of displaying the results with a mark, a method of displaying the results with a mask having a different contrast, and the like. A flow of processing using a display of the subject recognition results using any one of such methods will be described hereinbelow.

### • Basic Operation

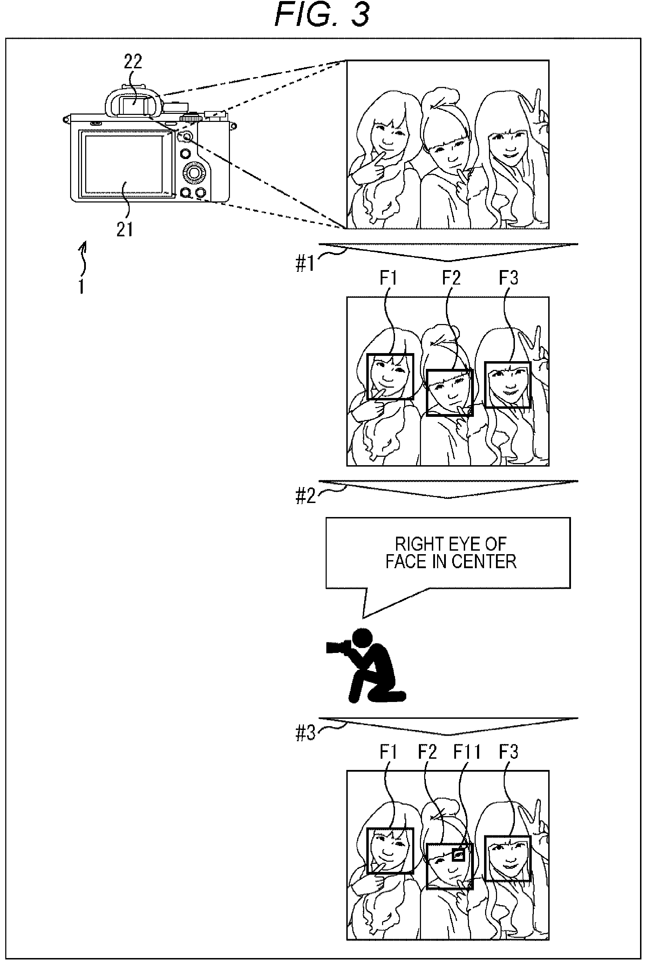

Fig. 3 is a diagram illustrating a flow of processing in a case where the subject recognition results are displayed by enclosing them with a frame.

As illustrated in the upper part of Fig. 3, a live view image in which subjects in an angle of view appear is displayed on the display unit including a liquid crystal display monitor 21, a viewfinder 22, and the like. In the example of Fig. 3, the live view image is displayed in which three persons appear side by side.

The imaging device 1 recognizes respective faces of three persons by performing subject recognition on the captured image, and displays frames F1 to F3 enclosing the respective faces as indicated by a tip of a downward triangle #1.

The photographer can confirm that the imaging device 1 recognizes the faces of three persons by viewing the frames F1 to F3.

As indicated by a tip of a downward triangle #2, in a case where the photographer gives an instruction to set the right eye of the person in the center as the focus position by speaking "right eye of face in the center", the imaging device 1 estimates the intention of the photographer and sets the right eye of the person appearing in the center of the live view image as the focus position.

Thereafter, as indicated by a tip of a downward triangle #3, the imaging device 1 displays a frame F11 enclosing the right eye of the person appearing in the center of the live view image, thereby notifying the photographer of the subject set as the focus position. The frame F11 is displayed in a color different from that of the frames F1 to F3, for example, the frames F1 to F3 are colored in green and the frame F11 is colored in red.

The photographer can take a shot focused on the right eye of the person in the center by pressing a shutter button in a state shown in a lower part of Fig. 3.

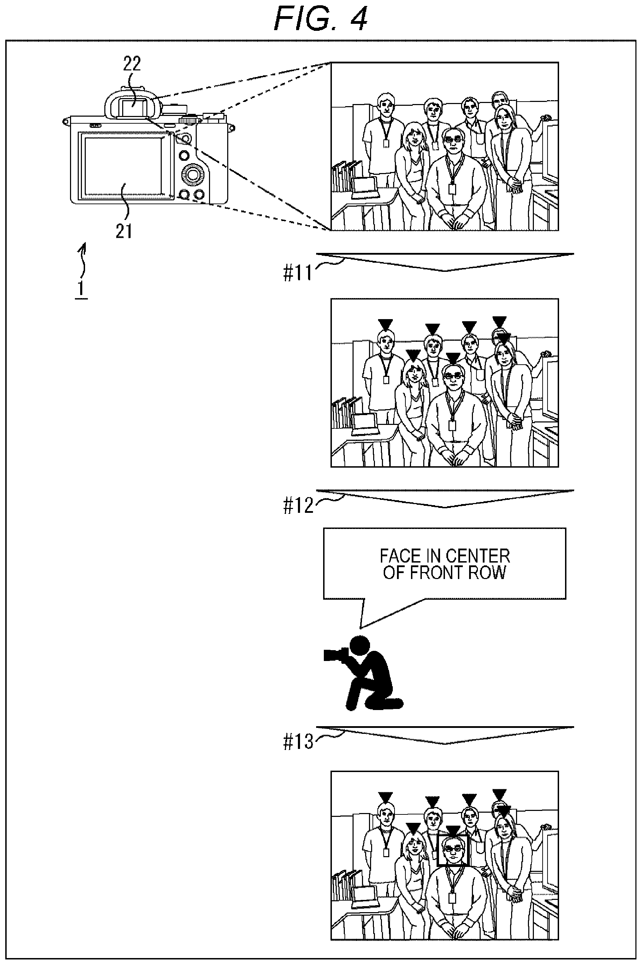

Fig. 4 is a diagram illustrating a flow of processing in a case where subject recognition results are indicated by a mark.

In the example of Fig. 4, the live view image is displayed in which seven persons appear. Three persons line up in front, and the other four persons line up behind.

The imaging device 1 recognizes respective faces of seven persons by performing subject recognition on the captured image, and displays inverted triangle marks (inverted triangle images) so as to indicate the respective faces of seven persons as indicated by a tip of a downward triangle # 11.

The photographer can confirm that the imaging device 1 recognizes the faces of seven persons by viewing the marks.

As indicated by a tip of a downward triangle #12, in a case where the photographer gives an instruction to set a face in the center of a front row as the focus position by speaking "face in the center of front row", the imaging device 1 estimates the intention of the photographer and sets the face of the person appearing in the center of the front row in the live view image as the focus position.

Thereafter, as indicated by a tip of a downward triangle #13, the imaging device 1 displays a frame enclosing the face of the person appearing in the center of the front row in the live view image, thereby notifying the photographer of the subject set as the focus position. For example, the frame for providing notification of the focus position is displayed in a color different from the marks indicating the faces.

The photographer can take a shot focused on the face of the person in the center of the front row by pressing a shutter button in a state shown in a lower part of Fig. 4.

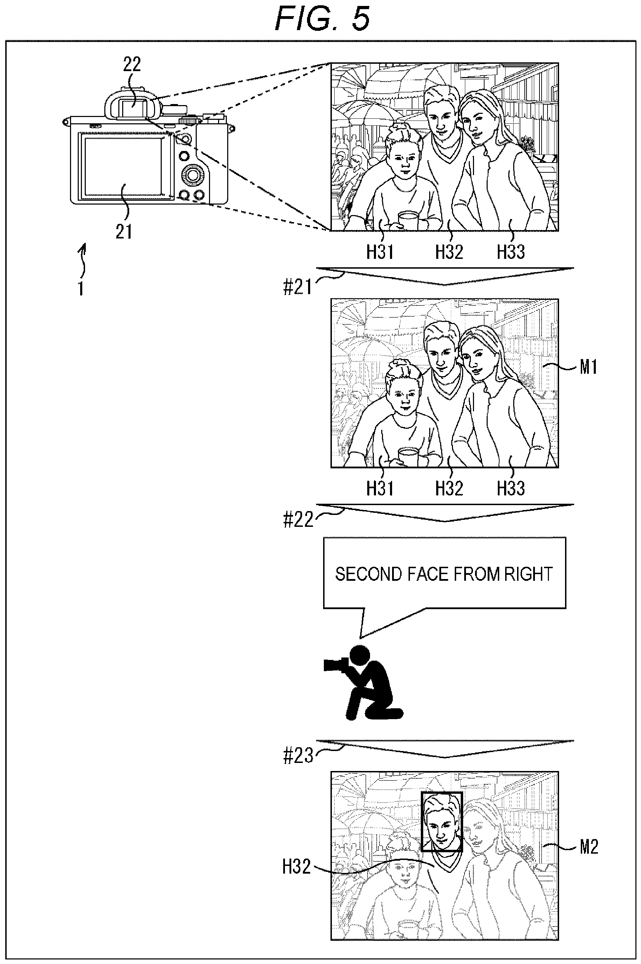

Fig. 5 is a diagram illustrating a flow of processing in a case where subject recognition results are indicated by a mask.

In the example of Fig. 5, the live view image is displayed in which persons H31 to H33 appear. Other persons and buildings are shown behind the persons H31 to H33.

The imaging device 1 recognizes respective faces of the persons H31 to H33 by performing subject recognition on the captured image, and displays a mask image M1 as indicated by a tip of a downward triangle #21. The mask image M1 is an image that masks a region other than a region where the persons H31 to H33 appear (translucent image covering such a region). Since the imaging device 1 does not recognize faces of other persons, a region in which others appear is masked by the mask image M1.

The photographer can confirm that the imaging device 1 recognizes the persons H31 to H33 by viewing the mask image M1.

As indicated by a tip of a downward triangle #22, in a case where the photographer gives an instruction to set the face of the person H32 as the focus position by speaking "second face from right", the imaging device 1 estimates the intention of the photographer and sets the face of the person H32 as the focus position.

Thereafter, as indicated by a tip of a downward triangle #23, the imaging device 1 displays a frame enclosing the face of the person H32 and a mask image M2, thereby notifying the photographer of the subject set as the focus position. The mask image M2 is an image that masks a region other than a region where the persons H32 appears.

The photographer can take a shot focused on the face of the person H32 by pressing a shutter button in a state shown in a lower part of Fig. 5.

As described above, the imaging device 1 displays a frame enclosing a face of a person recognized by the imaging device 1, a mark indicating a face of a person recognized by the imaging device 1, or an image masking a region other than a region occupied by a person recognized by the imaging device 1, as the information representing recognition results of the subject appearing in the live view image. Furthermore, in response to the voice input giving an instruction on the focus position, the focus position intended by the photographer is estimated, and a frame enclosing the estimated focus position is displayed. The frame enclosing the focus position is displayed in a superimposed manner on the live view image together with the frame enclosing the face of the person.

Since the information is displayed on the basis of the estimation results of the intention of the photographer, the frame enclosing the focus position is information that displays recognition results reflecting the intention of the photographer. By displaying the frame enclosing the focus position, the photographer can confirm whether or not their intention is appropriately understood by the imaging device 1.

In the description above, the frame enclosing, for example, the face of the subject is a rectangular frame, but a frame having another shape such as a circular frame or a frame having a shape along a contour of a region occupied by the subject may be displayed. In addition, while a mark indicating the subject is an inverted triangular mark, the other images, such as a mark or an icon having another shape, may be displayed.

### •Sequence Operation

A case where an instruction on one subject appearing in the live view image is given as the focus position by the photographer has been described, however it is also possible to give an instruction on a plurality of subjects as focus positions. In a case where an instruction is given to set a plurality of subjects as focus positions, the imaging device 1 performs so-called bracketing that several shots are taken by sequentially focusing on each of a plurality of the subjects on which an instruction is given by the photographer as a sequence operation.

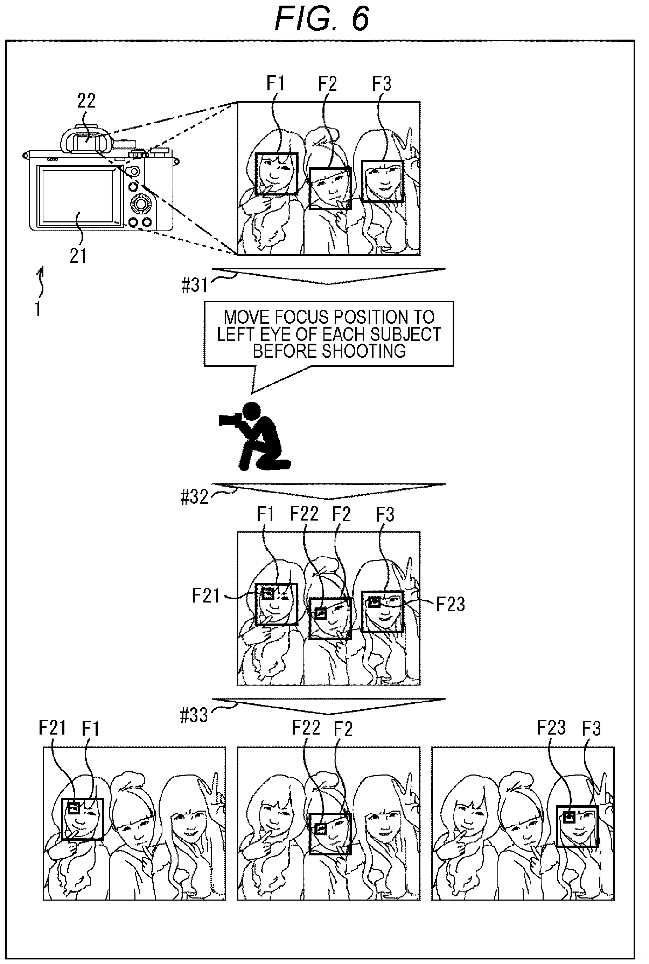

Fig. 6 is a diagram illustrating a flow of processing the sequence operation.

In an upper part of Fig. 6, frames F1 to F3 are displayed so as to enclose faces of three persons appeared side by side, similarly to a case described with reference to Fig. 3.

As indicated by a tip of a downward triangle #31, in a case where the photographer gives an instruction to set the left eye of each of three persons as the focus position by speaking "move focus position to left eye of each subject before shooting", the imaging device 1 estimates the intention of the photographer and sets the left eye of each of three persons appearing in the live view image as the focus position.

Thereafter, as indicated by a tip of a downward triangle #32, the imaging device 1 displays frames F21 to F23 respectively enclosing the left eyes of three persons appearing in the live view image, thereby notifying the photographer of the subject set as the focus position. For example, the frames F21 to F23 are displayed in a color different from that of the frames F1 to F3.

By pressing a shutter button in this state, the photographer can take three images in a burst mode while focusing on each of the eyes respectively enclosed by the frames F21 to F23 as indicated by a tip of a downward triangle # 33.

As described above, the imaging device 1 visualizes and provides notification of subject recognition result to the photographer. The photographer can confirm the visualized information and appropriately give an instruction on the subject intended as the focus position using voice.

Communication is established between the imaging device 1 and the photographer such that the imaging device 1 displays subjects recognition results and the photographer notifies the imaging device 1 of their intention while confirming the display. By establishing such communication, the imaging device 1 can prevent wrong recognition for the instruction of the photographer.

### • Learning Operation

The imaging device 1 learns a subject to be shot and a subject not to be shot according to the subject recognition results obtained in the basic operation as described above and the focus position on which an instruction is given by the photographer. The notification of subject recognition results may be performed by selectively recognizing only a subject to be shot on the basis of learning results and displaying recognition results.

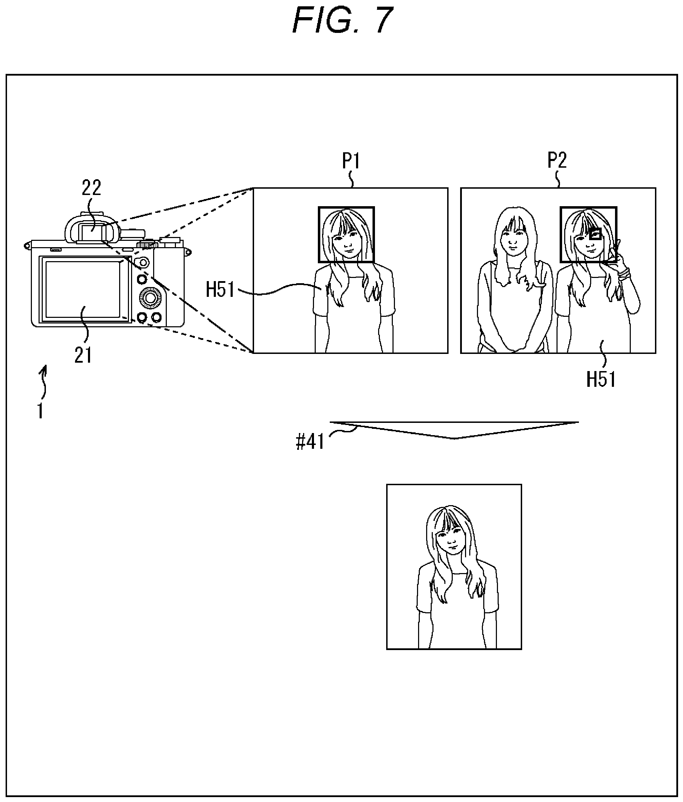

Fig. 7 is a diagram illustrating flow of processing subject recognition based on learning results.

As illustrated in an upper part of Fig. 7, it is assumed that several shots are taken by the imaging device 1 while, for example, a face or an eye of a person H51 is set as the focus position. Images P1 and P2 illustrated in the upper part of Fig. 7 are images shot at different timings. The person H51 appearing in the image P1 and the person H51 appearing in the image P2 are the same person.

In a case where such shooting is performed, the imaging device 1 learns that the person H51 is a subject to be shot on the basis of the images P1 and P2 obtained by shooting as indicated by a tip of a downward triangle #41. Thereafter, in a case where the person H51 is included in persons to be shot by the photographer, notification of recognition results is provided to let the photographer know that the face of the person H51 is recognized.

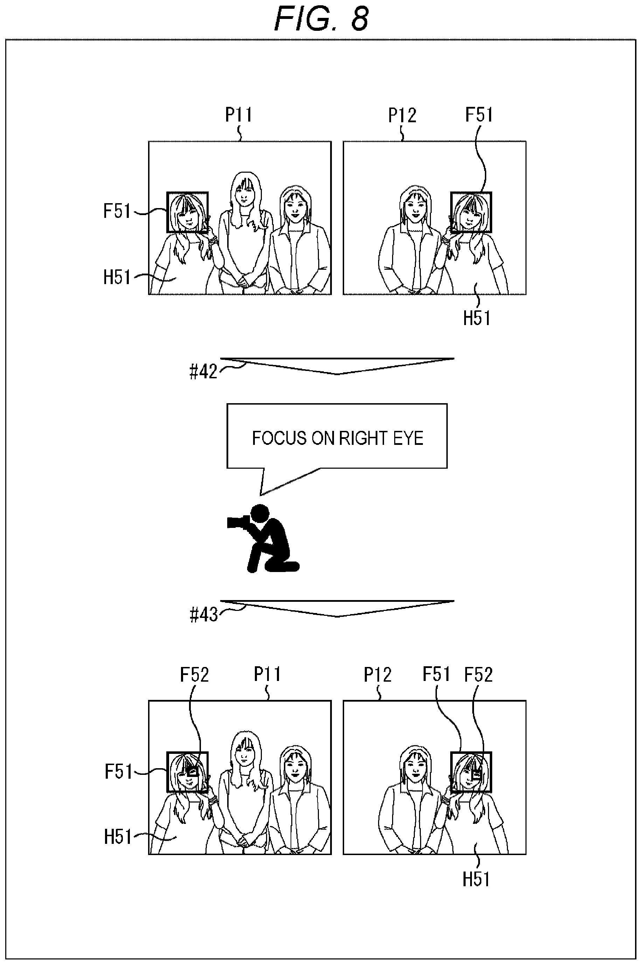

For example, as illustrated in an upper part of Fig. 8, in a case where the subject appearing in the live view image changes, the imaging device 1 provides notification of recognition results by displaying a frame F51 enclosing the face of the person H51 on the basis of learning results. Images P11 and P12 illustrated in the upper part of Fig. 8 are images shot at different timings, and the person H51 is captured in each image.

The photographer can confirm that the imaging device 1 recognizes only the person H51 as the subject to be shot by viewing the frame F51.

As indicated by a tip of a downward triangle #42, in a case where the photographer gives an instruction to set the right eye of the person H51 as the focus position by speaking "focus on right eye", the imaging device 1 estimates the intention of the photographer and sets the right eye of the person H51 as the focus position.

Thereafter, as indicated by a tip of a downward triangle #43, the imaging device 1 displays a frame F52 enclosing the right eye of the person H51, thereby notifying the photographer of the subject set as the focus position. For example, the frame F52 is displayed in a color different from that of the frame F51.

The photographer can take a shot focused on the right eye of the person H51 by pressing a shutter button in a state shown in a lower part of Fig. 8.

As described above, the photographer can take a shot not needing to speak an instruction for a specific person to set the focus position, such as "person at the left end" when shooting the image P11 and "person on the right side" when shooting the image P12.

As stated above, the imaging device 1 selectively recognizes the same subject as a subject previously shot by the photographer on the basis of learning results from among subjects appearing in the live view image, and displays a frame enclosing a face of a person who is the subject. The same subject as the subject previously shot is specified on the basis of, for example, features of the subject.

Furthermore, in response to the voice input giving an instruction on the focus position, the focus position intended by the photographer is estimated and a frame enclosing the estimated focus position is displayed, similarly to the basic operation described above. In the example of Fig. 8, a frame enclosing an eye that is a part of the person specified on the basis of learning results is displayed.

Since the same subject is continuously selectively recognized as a subject to be shot even in a case where shooting situations change, the imaging device 1 can appropriately take a shot according to the intention of the photographer in response to a voice instruction made by of the photographer.

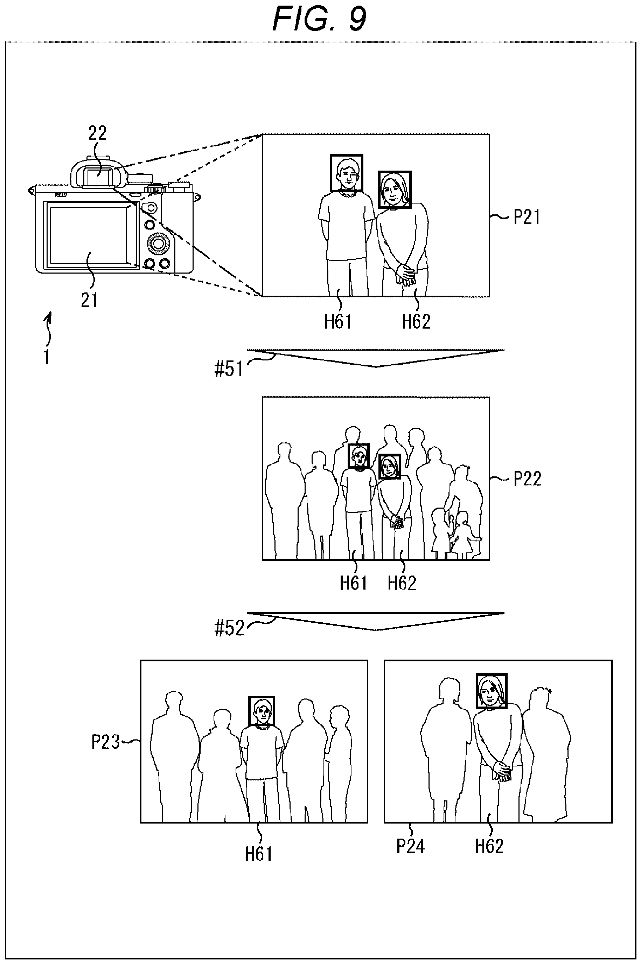

Fig. 9 is a diagram illustrating another flow of processing subject recognition based on learning results. Fig. 9 illustrates a flow of processing in a case where the imaging device 1 recognizes a plurality of subjects.

As illustrated in an upper part of Fig. 9, it is assumed that several shots are taken by the imaging device 1 while faces of persons H61 and H62 are set as the focus positions. An image P21 illustrated in the upper part of Fig. 9 is an image in which only the persons H61 and H62 are captured.

In a case where such shooting is performed, the imaging device 1 learns that the persons H61 and H62 are subjects to be shot on the basis of, for example, the image P21 obtained by shooting. Further, learning may be performed on the basis of images in which other persons appear together with the persons H61 and H62. Thereafter, in a case where the persons H61 and H62 are included in persons to be shot by the photographer, notification of recognition results is provided to let the photographer know that the faces of the persons H61 and H62 are recognized.

For example, as indicated by a tip of a downward triangle #51, in a case where more persons appear in the live view image, the imaging device 1 provides notification of recognition results by displaying frames enclosing the faces of the persons H61 and H62 on the basis of learning results. The persons H61 and H62 are captured in an image P22 illustrated in the center of Fig. 9.

Accordingly, the photographer can confirm that the imaging device 1 recognizes the persons H61 and H62 as the subjects to be shot. In such a state, the photographer can give an instruction on the focus position by speaking, for example, "autofocus on eyes on two faces". Furthermore, by pressing a shutter button in such a state, the photographer can take a burst shot including an image focusing on the face of the person H61 and an image focusing on the face of the person H62.

For example, as indicated by a tip of a downward triangle #52, in a case where any one of the persons H61 and H62 appears in the live view image, the imaging device 1 provides notification of recognition results by displaying a frame enclosing the face of the person H61 or H62 on the basis of learning results. Images P23 and P24 illustrated in a lower part of Fig. 9 are images shot at different timings. The person H61 appears in the image P23, and the person H62 appears in the image P24.

Accordingly, the photographer can confirm that the imaging device 1 recognizes the person H61 or H62 as the subject to be shot. The photographer can take a shot focused on the face of the person H61 or H62 by pressing a shutter button in a state shown in the lower part of Fig. 9.

Further, the mark, mask image, or the like described above can be displayed instead of the frame as the information representing recognition results for the subject to be shot. Furthermore, the mark, mask image, or the like may be displayed as the information representing the set focus position.

### <2. Configuration of Imaging Device>

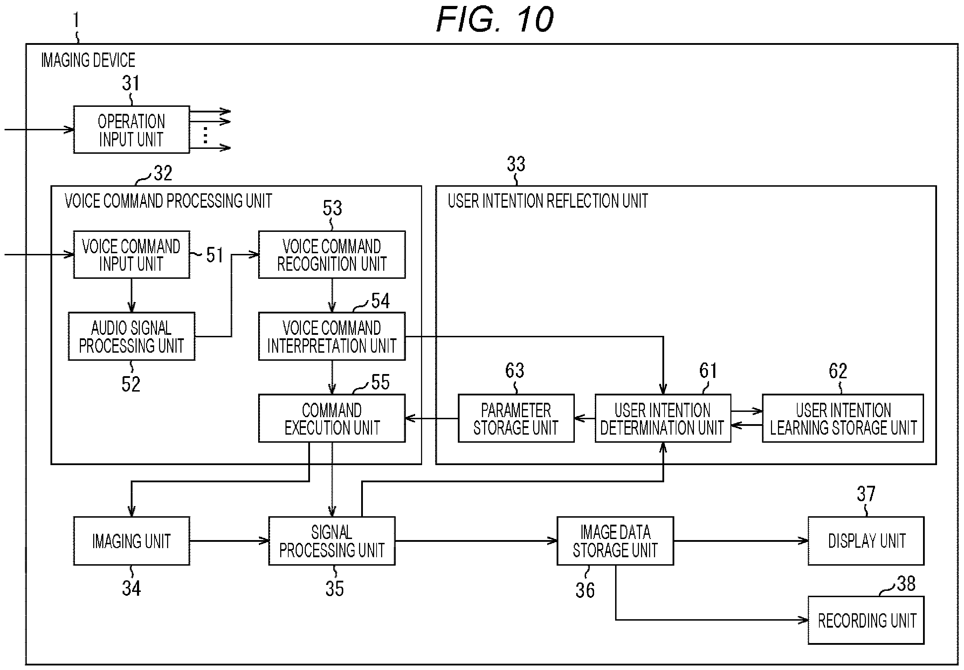

Fig. 10 is a block diagram a configuration example of the imaging device 1.

As illustrated in Fig. 10, the imaging device 1 includes an operation input unit 31, a voice command processing unit 32, a user intention reflection unit 33, an imaging unit 34, a signal processing unit 35, an image data storage unit 36, a display unit 37, and a recording unit 38.

The operation input unit 31 includes, for example, a button, a touchscreen monitor, a controller, a remote operation unit, and the like. The operation input unit 31 detects a camera operation made by the photographer and outputs an operation instruction representing the content of the detected camera operation. The operation instruction output from the operation input unit 31 is appropriately supplied to each component of the imaging device 1.

The voice command processing unit 32 includes a voice command input unit 51, an audio signal processing unit 52, a voice command recognition unit 53, a voice command interpretation unit 54, and a command execution unit 55.

The voice command input unit 51 includes a sound collector such as a microphone. The voice command input unit 51 collects speaking of the photographer and outputs an audio signal to the audio signal processing unit 52.

Further, the speaking of the photographer may be collected by a microphone different from the microphone mounted on the imaging device 1. It is possible to collect the speaking of the photographer by an external device connected to the imaging device 1, such as a lapel microphone or a microphone provided in another device.

The audio signal processing unit 52 performs signal processing such as noise reduction on the audio signal supplied from the voice command input unit 51, and outputs the audio signal subject to the signal processing to the voice command recognition unit 53.

The voice command recognition unit 53 performs voice recognition on the audio signal supplied from the audio signal processing unit 52, and detects a voice command. The voice command recognition unit 53 outputs detection results of the voice command to the voice command interpretation unit 54.

The voice command interpretation unit 54 performs semantic analysis on the voice command detected by the voice command recognition unit 53, and determines whether or not the voice command input by the photographer is a command giving an instruction on the focus position.

In a case where the voice command is a command giving an instruction on the focus position, the voice command interpretation unit 54 outputs semantic analysis results of the voice command to a user intention determination unit 61 of the user intention reflection unit 33. In addition, the voice command interpretation unit 54 outputs semantic analysis results of the voice command to the command execution unit 55.

The command execution unit 55 reads parameters for subject recognition from a parameter storage unit 63 of the user intention reflection unit 33. On the basis of the semantic analysis results supplied from the voice command interpretation unit 54, the command execution unit 55 executes processing according to the voice command input by the photographer using the parameters read from the parameter storage unit 63.

For example, the command execution unit 55 causes the signal processing unit 35 to perform subject recognition using the parameters for subject recognition. In addition, the command execution unit 55 controls the signal processing unit 35 to display information representing the focus position by superimposing the information on the live view image.

Furthermore, the command execution unit 55 controls the imaging unit 34 to take a shot by focusing on a position designated by the photographer.

The user intention reflection unit 33 includes a user intention determination unit 61, a user intention learning storage unit 62, and a parameter storage unit 63.

The user intention determination unit 61 estimates the focus position intended by the photographer on the basis of the semantic analysis results supplied from the voice command interpretation unit 54. The user intention determination unit 61 sets the parameters for subject recognition to recognize a subject such as a face or an eye estimated as the focus position, and stores the parameters in the parameter storage unit 63. As the parameters for subject recognition, feature amounts of the subject estimated as the focus position is stored in the parameter storage unit 63.

For example, in a case where the faces of three persons are recognized as described with reference to Fig. 3 and a voice of "right eye of face in the center" is input, it is estimated that the right eye of the person appearing in the center of the live view image is set as the focus position, and parameters for recognizing the right eye are set. Subject recognition results before the input of the voice command are appropriately supplied from the signal processing unit 35 to the user intention determination unit 61.

Furthermore, the user intention determination unit 61 extracts feature amounts of the subject to be shot by the photographer on the basis of, for example, the subject recognition results supplied from the signal processing unit 35. The user intention determination unit 61 stores the extracted feature amounts of the subject in the user intention learning storage unit 62 together with the information representing that the photographer has taken a shot of the subject, thereby learning the subject to be shot as described with reference to Fig. 7.

In a case where the subject is learned, the feature amounts stored in the user intention learning storage unit 62 are set in the signal processing unit 35 as the parameters for subject recognition, and the same subject as the subject previously shot by the photographer is recognized as described with reference to Figs. 8 and 9. Furthermore, the focus position is recognized by setting as the focus position a part of the same subject, such as a face or an eye, as the subject previously shot by the photographer.

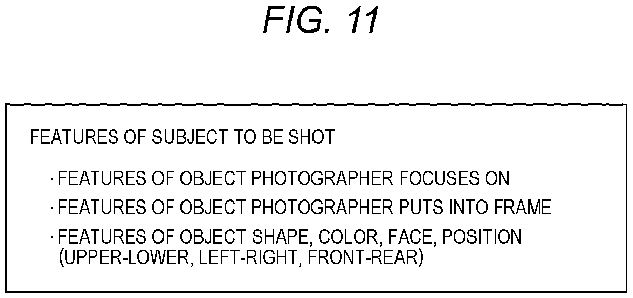

Fig. 11 is a diagram illustrating an example of feature amounts of the subject to be shot.

As illustrated in Fig. 11, for example, feature amounts of an object focused by the photographer, feature amounts of an object appearing in an image captured by the photographer, and the like are extracted as feature amounts of the subject to be shot.

The feature amounts of these objects are represented by, for example, at least one of shape, color, face, or position (position such as upper-lower, left-right and front-rear) of the subject in the image.

The user intention learning storage unit 62 shown in Fig. 10 includes an internal memory. The user intention learning storage unit 62 stores the feature amounts of the subject to be shot extracted by the user intention determination unit 61 and information representing a subject shot by the photographer. The user intention learning storage unit 62 functions as a learning unit that learns the features of the subject previously shot by the photographer.

The parameter storage unit 63 stores the parameters for subject recognition set by the user intention determination unit 61.

The imaging unit 34 includes, for example, an optical system, a drive unit, and an image sensor. The imaging unit 34 controls a focus position (focal length) according to control by the command execution unit 55, and takes a shot by converting received light into an electric signal. The image shot by the imaging unit 34 is output to the signal processing unit 35.

The signal processing unit 35 performs subject recognition on the image supplied from the imaging unit 34, and stores information representing subject recognition results in the image data storage unit 36 together with the image. A mark, such as a frame enclosing a face, is displayed on the basis of the information stored in the image data storage unit 36, and the photographer is notified of the subject recognition results.

Furthermore, in a case where the voice command is input, the signal processing unit 35 performs signal processing such as subject recognition and display of the focus position under the control of the command execution unit 55. For example, subject recognition in a case where the voice command is input is performed so as to recognize a face or an eye to be a focus position on the basis of the feature amounts set by the command execution unit 55 as the parameters for subject recognition.

The image data storage unit 36 includes, for example, a dynamic random access memory (DRAM) and a static random access memory (SRAM). The image data storage unit 36 temporarily stores the image supplied from the signal processing unit 35 and the information representing subject recognition results. The image data storage unit 36 outputs the image and the information representing subject recognition results to the display unit 37, and/or outputs the image to the recording unit 38 according to the operation by the photographer.

The display unit 37 includes the liquid crystal display monitor 21 and the viewfinder 22. The display unit 37 converts the image supplied from the image data storage unit 36 into an image with appropriate resolution, and displays in a superimposed manner, the information representing subject recognition results on the image.

The recording unit 38 includes an internal memory and a memory card attached to the imaging device 1. The recording unit 38 records the image supplied from the image data storage unit 36. The recording unit 38 may be provided in an external device such as an external hard disk drive (HDD) or a server device on a cloud.

### <3. Operations of Imaging Device>

Operations of the imaging device 1 having the configuration above will be described hereinbelow.

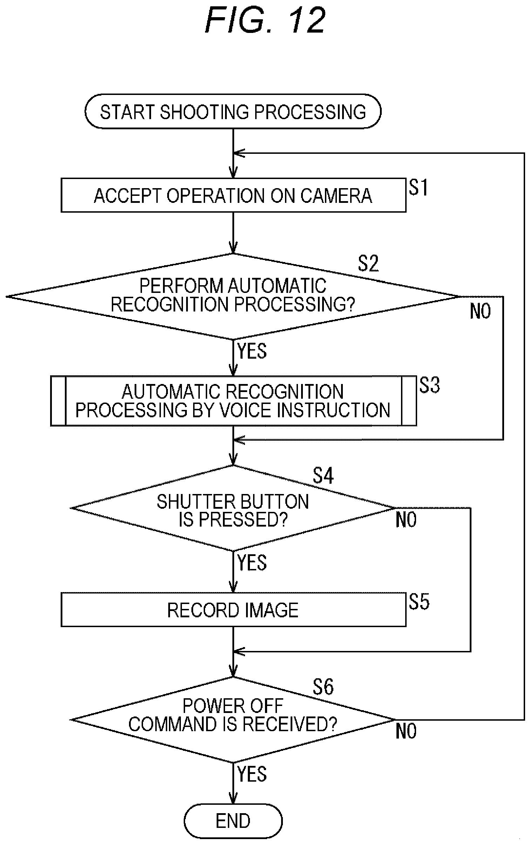

Shooting processing will be described with reference to a flowchart of Fig. 12. The shooting processing of Fig. 12 is initiated, for example, when a power ON command is input to the operation input unit 31 by the photographer. At this time, the imaging unit 34 initiates capturing of an image, and a live view image is displayed on the display unit 37.

In step S1, the operation input unit 31 accepts a camera operation by the photographer. For example, operations such as framing and camera setting are performed by the photographer.

In step S2, the imaging device 1 determines whether or not to perform automatic recognition processing by a voice instruction. As described with reference to Fig. 3 and the like, the automatic recognition processing by a voice instruction is processing in which notification of recognition results by the imaging device 1 is provided to the photographer, and the photographer gives an instruction on the focus position in response to such a notification.

In a case where it is determined in step S2 that the automatic recognition processing by a voice instruction should be performed, the imaging device 1 performs the automatic recognition processing by a voice instruction in step S3.

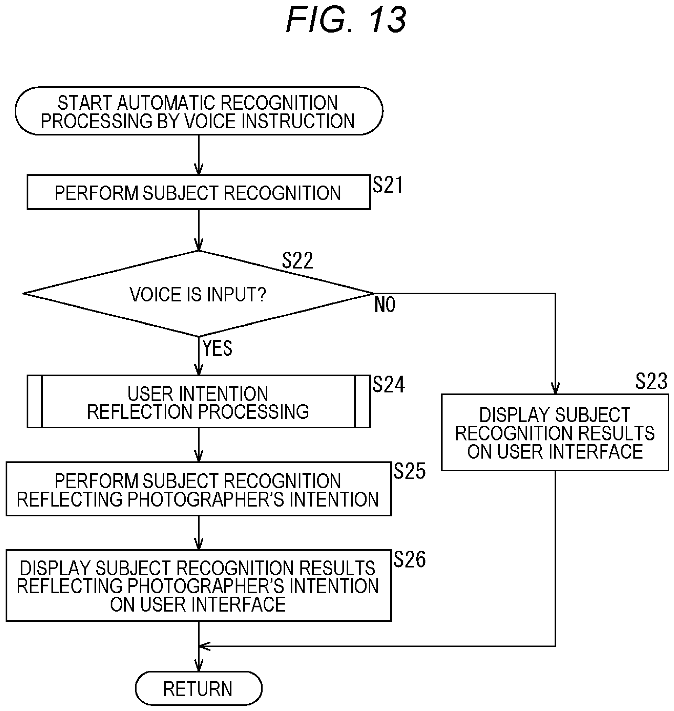

For example, in a case where the photographer gives an instruction to set a mode for performing automatic recognition processing by a voice instruction as the shooting mode, it is determined that the automatic recognition processing should be performed. The setting of the shooting mode may be performed by voice or by operation using the operation input unit 31. Details of the automatic recognition processing by a voice instruction will be described later with reference to a flowchart shown in Fig. 13.

On the other hand, in a case where it is determined in step S2 that the automatic recognition processing by a voice instruction should not be performed, the processing in step S3 is skipped.

In step S4, the operation input unit 31 determines whether or not a shutter button has been pressed.

In a case where it is determined in step S4 that the shutter button has been pressed, the recording unit 38 records an image in step S5. The image shot by the imaging unit 34 is supplied from the image data storage unit 36 to the recording unit 38 and recorded.

On the other hand, in a case where it is determined in step S4 that the shutter button has not been pressed, the processing in step S5 is skipped.

In step S6, the operation input unit 31 determines whether or not a power OFF command has been received from the photographer.

In a case where it is determined in step S6 that the power OFF command has not been received, the processing returns to step S1, and the subsequent processing is performed. In a case where it is determined in step S6 the power OFF command has been received, the processing ends.

Next, the automatic recognition processing by a voice instruction performed in step S3 of Fig. 12 will be described in detail with reference to Fig. 13.

In step S21, the signal processing unit 35 performs subject recognition on the image shot by the imaging unit 34 by using the parameters for subject recognition read from the parameter storage unit 63, for example. For example, the signal processing unit 35 recognizes a face of a person from the image using parameters for recognizing a person's face.

In step S22, the voice command input unit 51 determines whether or not voice input is made by the photographer.

In a case where it is determined in step S22 that no voice input has been made, in step S23, the signal processing unit 35 superimposes the subject recognition results on the image acquired by the imaging unit 34 and causes the display unit 37 to show the subject recognition results on a user interface (UI). Thereafter, the processing returns to step S3 in Fig. 11, and the subsequent processing is performed. The photographer views the display on the UI and input voice such as a voice command for giving an instruction on the focus position.

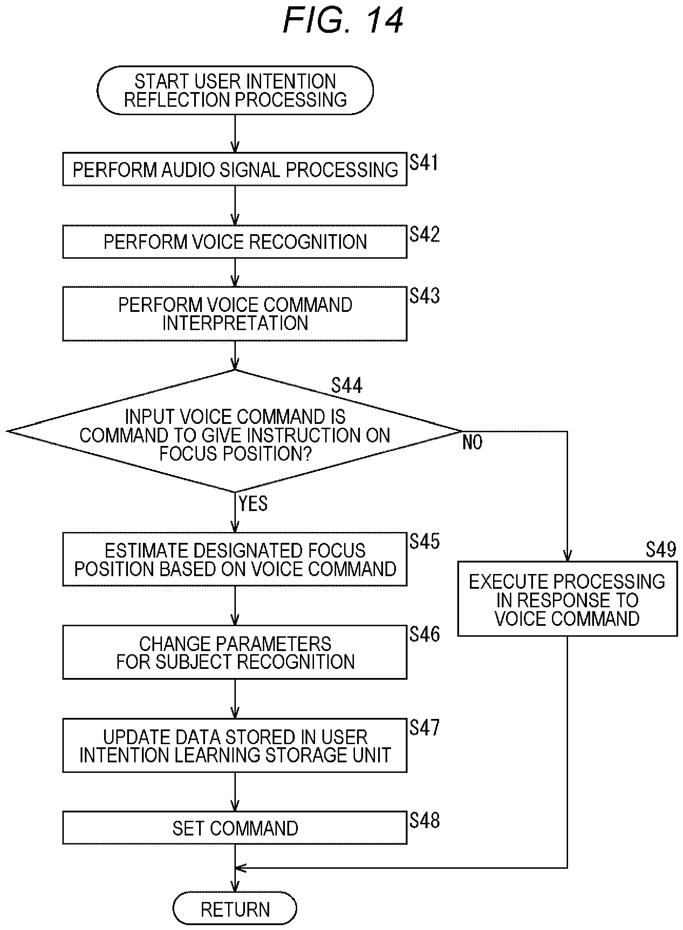

On the other hand, in a case where it is determined in step S22 that voice input has been made, the imaging device 1 performs user intention reflection processing in step S24. The focus position is estimated by the user intention reflection processing, and the parameters for subject recognition are set. The user intention reflection processing will be described later with reference to a flowchart shown in Fig. 14.

In step S25, the signal processing unit 35 performs subject recognition reflecting the intention of the photographer according to the control by the command execution unit 55. Specifically, the signal processing unit 35 recognizes the subject estimated as the focus position using the parameters set by the user intention reflection processing in step S24.

In step S26, the signal processing unit 35 superimposes the subject recognition results on the image acquired by the imaging unit 34 and causes the display unit 37 to show the subject recognition results reflecting the intention of the photographer on a user interface (UI). Thereafter, the processing returns to step S3 in Fig. 12, and the subsequent processing is performed.

Next, the user intention reflection processing performed in step S24 of Fig. 13 will be described with reference to the flowchart in Fig. 14.

In step S41, the audio signal processing unit 52 performs audio signal processing on the audio signal input by the photographer.

In step S42, the voice command recognition unit 53 performs voice recognition on the audio signal subject to audio signal processing, and detects a voice command.

In step S43, the voice command interpretation unit 54 performs semantic analysis of the voice command on the basis of the detection results of the voice command.

In step S44, the voice command interpretation unit 54 determines whether or not the voice command input by the photographer is a command giving an instruction on the focus position. For example, in a case where a word giving an instruction on the focus position is included in the voice command, it is determined that the voice command is a command giving an instruction on the focus position.

Words giving an instruction on the focus position are set in advance in, for example, the voice command interpretation unit 54. Words giving an instruction on the focus position may be configured by a single word or may be configured by a sentence including a plurality of words. In a case where the voice command including a word similar to a word giving an instruction on the focus position is input instead of the word giving an instruction on the focus position, it may be determined that the voice command input by the photographer is a command giving an instruction on the focus position.

In a case where it is determined in step S44 that the voice command is a command giving an instruction on the focus position, in step S45, the user intention determination unit 61 estimates the focus position on the basis of the voice command, and reads feature amounts for recognizing a subject to be the focus position from the user intention learning storage unit 62.

In step S46, the user intention determination unit 61 changes the parameters for subject recognition and stores the changed parameters in the parameter storage unit 63. The parameters for subject recognition stored in the parameter storage unit 63 are changed to parameters for subject recognition on which an instruction is given as the focus position by the photographer. As the parameters for subject recognition are changed, the signal processing unit 35 now can recognize the subject on which an instruction is given as the focus position by the photographer.

In step S47, the user intention determination unit 61 extracts feature amounts of the subject to be shot by the photographer. The user intention determination unit 61 updates data of the user intention learning storage unit 62 by storing the extracted feature amounts.

In step S48, the command execution unit 55 reads the parameters for subject recognition from the parameter storage unit 63, and puts the voice command in the signal processing unit 35 together with the parameters for subject recognition. Furthermore, the command execution unit 55 controls the imaging unit 34 to focus on a position designated by the photographer.

Thereafter, the processing returns to step S24 in Fig. 13, and the subsequent processing is performed. The signal processing unit 35 performs subject recognition reflecting the intention of the photographer using the parameters for subject recognition set by the user intention determination unit 61.

On the other hand, in a case where it is determined in step S44 that the voice command is not a command giving an instruction on the focus position, the command execution unit 55 executes processing according to the voice command in step S49. Thereafter, the processing returns to step S24 in Fig. 13, and the subsequent processing is performed.

As described above, the imaging device 1 recognizes the subject to be shot appearing in the live view image and displays in a superimposed manner, the information representing the recognized subject to be shot on the live view image. Furthermore, the focus position is estimated on the basis of the voice command input by the photographer, and the information representing the estimated focus position is displayed in a superimposed manner on the live view image.

While confirming the information displayed on the display unit 37 of the imaging device 1, the photographer can instruct the imaging device 1 of the appropriate focus position by voice.

### <4. Modified Example>

Although a case of setting the focus position by the voice giving an instruction on the subject has been mainly described, setting of other shooting parameters such as exposure setting may also be performed by voice.

Furthermore, although the recognition results of the imaging device 1 and the recognition results reflecting the intention of the user are displayed at the same time, only the recognition results reflecting the intention of the user may be displayed after the input of the voice command.

- About Computer

The series of processing stated above can be executed by hardware or software. In a case where the series of processing is executed by software, a program constituting the software is installed from a program recording medium to, for example, a computer incorporated in dedicated hardware or a general-purpose personal computer.

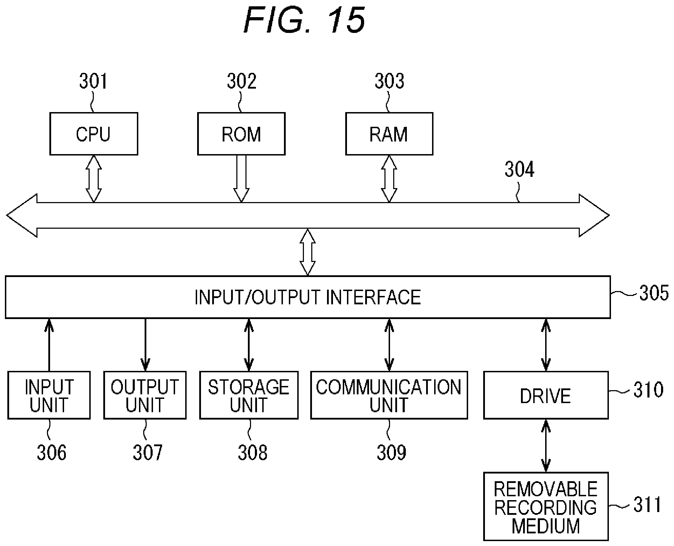

Fig. 15 is a block diagram illustrating a configuration example of hardware of a computer that executes the series of processing stated above by a program.

A central processing unit (CPU) 301, a read only memory (ROM) 302, and a random access memory (RAM) 303 are connected to each other by a bus 304.

An input/output interface 305 is further connected to the bus 304. An input unit 306 including, for example, a keyboard and a mouse, and an output unit 307 including, for example, a display and a speaker are connected to the input/output interface 305. In addition, a storage unit 308 including, for example, a hard disk or a nonvolatile memory, a communication unit 309 including, for example, a network interface, and a drive 310 that drives a removable medium 311 are connected to the input/output interface 305.

In the computer configured as described above, for example, the CPU 301 loads a program stored in the storage unit 308 into the RAM 303 via the input/output interface 305 and the bus 304 and executes the program, whereby the series of processing stated above is performed.

The program executed by the CPU 301 is provided, for example, by being recorded in the removable medium 311 or via a wired or wireless transmission medium such as a local area network, the Internet, or digital broadcasting, which is installed in the storage unit 308.

Further, the program executed by the computer may be a program in which processing is performed in the chronological order described in the present specification, or may be a program in which processing is performed in parallel or at necessary timing such as when a call is made.

The effects described in the present specification are merely examples and are not limited thereto, and other effects may be provided.

Embodiments of the present technology are not limited to the embodiments described above, and various modifications can be made without departing from the gist of the present technology.

For example, the present technology can have a configuration of cloud computing in which one function is shared and processed in cooperation by a plurality of devices via a network.

In addition, each step described in the flowchart stated above can be executed by a single device or can be shared and executed by multiple devices.

Furthermore, in a case where a plurality of processes is included in a single step, the plurality of processes included in the single step can be executed by a single device or can be shared and executed by multiple devices.

### <Combination Example of Configuration>

The present technology can also have the following configurations.

(1) An imaging device, including:
   a signal processing unit configured to display information representing recognition results of a subject in an image obtained by shooting, and to display in a superimposed manner, in response to a user's voice input indicating a focus position, information representing the focus position estimated as the user's intention on the image.
(2) The imaging device as set forth in (1), further including:
   an imaging unit configured to focus on the focus position and shoot in response to an instruction made by the user to take a picture while displaying information representing the focus position.
(3) The imaging device as set forth in (2), in which
   the imaging unit is configured to, in a case where a plurality of positions is indicated as the focus positions, focus on each of a plurality of the focus positions and take a burst shot.
(4) The imaging device as set forth in any one of (1) to (3), further including:
   a user intention determination unit configured to estimate a part of the same subject as a subject previously shot by the user as the focus position on the basis of the voice input by the user.
(5) The imaging device as set forth in (4), further including:
   a learning unit configured to learn features of a subject shot by the user, in which
   the user intention determination unit is configured to identify a subject previously shot by the user among subjects appearing in the image on the basis of the features of the subject learned by the learning unit.
(6) The imaging device as set forth in (5), in which
   the learning unit is configured to recognize the features of the subject including at least one of a shape, color, face, or position of the subject.
(7) The imaging device as set forth in (5) or (6), in which
   the signal processing unit is configured to recognize a subject appearing in the image and also recognize the focus position on the basis of the features of the subject learned by the learning unit.
(8) The imaging device as set forth in any one of (1) to (7), in which
   the signal processing unit is configured to display in a superimposed manner, the information representing the focus position and the information representing recognition results of the subject on the image.
(9) The imaging device as set forth in any one of (1) to (8), in which
   the signal processing unit is configured to display a frame enclosing the recognized subject, an image showing a contour of the subject, a mark pointing to the subject, or an image masking regions other than a region occupied by the subject, as the information representing recognition results of the subject appearing in the image.
(10) An imaging method, including:
   by an imaging device,
   displaying information representing recognition results of a subject in an image obtained by shooting; and
   displaying in a superimposed manner, in response to a user's voice input indicating a focus position, information representing the focus position estimated as the user's intention on the image.
(11) A program causing a computer to execute a process including:
   displaying information representing recognition results of a subject in an image obtained by shooting; and
   displaying in a superimposed manner, in response to a user's voice input indicating a focus position, information representing the focus position estimated as the user's intention on the image.

### REFERENCE SIGNS LIST

- 1: Imaging device
- 21: Liquid crystal display monitor
- 22: Viewfinder
- 31: Operation input unit
- 32: Voice command processing unit
- 33: User intention reflection unit
- 34: Imaging unit
- 35: Signal processing unit
- 36: Image data storage unit
- 37: Display unit
- 38: Recording unit
- 51: Voice command input unit
- 52: Audio signal processing unit
- 53: Voice command recognition unit
- 54: Voice command interpretation unit
- 55: Command execution unit
- 61: User intention determination unit
- 62: User intention learning storage unit
- 63: Parameter storage unit

## Claims

1. An imaging device, comprising:
a signal processing unit configured to display information representing recognition results of a subject in an image obtained by shooting, and to display in a superimposed manner, in response to a user's voice input indicating a focus position, information representing the focus position estimated as the user's intention on the image.

2. The imaging device according to claim 1, further comprising:
an imaging unit configured to focus on the focus position and shoot in response to an instruction made by the user to take a picture while displaying information representing the focus position.

3. The imaging device according to claim 2, wherein
the imaging unit is configured to, in a case where a plurality of positions is indicated as the focus positions, focus on each of a plurality of the focus positions and take a burst shot.

4. The imaging device according to claim 1, further comprising:
a user intention determination unit configured to estimate a part of the same subject as a subject previously shot by the user as the focus position on a basis of the voice input by the user.

5. The imaging device according to claim 4, further comprising:
a learning unit configured to learn features of a subject shot by the user, wherein
the user intention determination unit is configured to identify a subject previously shot by the user among subjects appearing in the image on a basis of the features of the subject learned by the learning unit.

6. The imaging device according to claim 5, wherein
the learning unit is configured to learn the features of the subject including at least one of a shape, color, face, or position of the subject.

7. The imaging device according to claim 5, wherein
the signal processing unit is configured to recognize a subject appearing in the image and also recognize the focus position on a basis of the features of the subject learned by the learning unit.

8. The imaging device according to claim 1, wherein
the signal processing unit is configured to display in a superimposed manner, the information representing the focus position and the information representing recognition results of the subject on the image.

9. The imaging device according to claim 1, wherein
the signal processing unit is configured to display a frame enclosing a recognized subject, an image showing a contour of the subject, a mark pointing to the subject, or an image masking regions other than a region occupied by the subject, as the information representing recognition results of the subject appearing in the image.

10. An imaging method, comprising:
by an imaging device,
displaying information representing recognition results of a subject in an image obtained by shooting; and
displaying in a superimposed manner, in response to a user's voice input indicating a focus position, information representing the focus position estimated as the user's intention on the image.

11. A program causing a computer to execute a process comprising:
displaying information representing recognition results of a subject in an image obtained by shooting; and
displaying in a superimposed manner, in response to a user's voice input indicating a focus position, information representing the focus position estimated as the user's intention on the image.
